# EUROPEAN PATENT APPLICATION

(11) **EP 1 752 868 A2**
(43) Date of publication of application: **14.02.2007**
(21) Application number: 06016714.5
(22) Date of filing: 10.08.2006
(51) Int. Cl.: G06F 3/048

(54) **Mobile terminal and method for region selection, for positioning and triggering of a screen focal point**

(30) Priority: 12.08.2005 CN 200510036630
(71) Applicant: Huawei Technologies Co., Ltd., Longgang District Shenzhen Guangdong 518129 (CN)
(72) Inventor: Liu, Haibo Huawei Admin. Bldg., Guangdong Province 518129 (CN)
(74) Representative: Maiwald Patentanwalts GmbH

(57) **Abstract**

The present invention discloses a mobile terminal keypad and a method for using the keypad, so that on-screen positioning operations including region selection may be implemented conveniently. In the present invention, a focal point on the screen is moved by rubbing a touch key; at least one lock key is added to lock or unlock current coordinates of the focal point on the screen. With the touch key and the lock key(s), a variety of mobile telephone operations (e.g., region selection) can be implemented by way of locking, moving, and unlocking. In addition, the touch key can also be pressed. The current focal point control can be triggered by rubbing the touch key and moving the focal point on the screen to the required control or option and then pressing the touch key. The touch key is located in the central part of front face of the mobile terminal, and two lock keys are located at two sides of the mobile terminal respectively. When the user holds the mobile terminal with one hand, the user's thumb and forefinger can be placed on the touch key and a lock key naturally. The two lock keys can also be used to trigger the left and the right soft keys.

## Description

### Field of the Invention

The present invention relates to the input technique for a mobile terminal, and in particular, to a mobile terminal and its keypad, a region selection method, and a method for positioning and triggering a screen focal point.

### Background of the Invention

With the development of the advanced new technologies, such as, communication technology and computer technology, people's life has changed greatly. The information transfer among people becomes more and more frequent in diversified manners, wherein, the rapid development of mobile communication is especially prominent.

Presently, mobile telephones designed for mobile communication become more and more popular, compact and light, which provide great convenience for the information communication in our daily work and life.

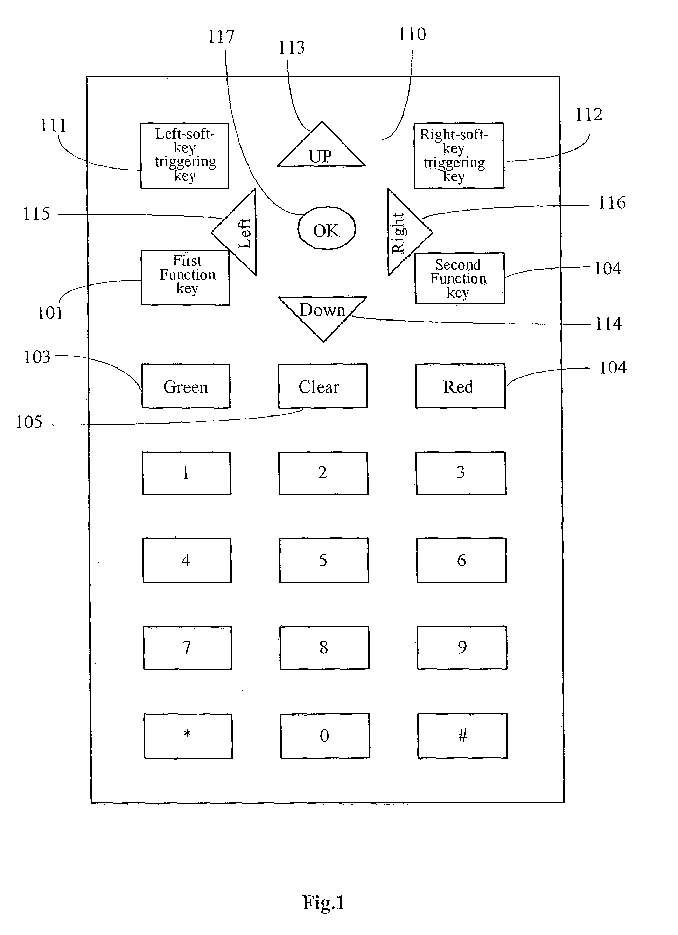

A common method for operating a mobile telephone is the key-operating method. As shown in Fig.1, the keypad of a key-operating mobile telephone usually has a direction key area 110 which is used for positioning. The direction key area 110 has a left and a right soft-key-triggering keys 111 and 112, four direction keys (Up, Down, Left, and Right) 113, 114, 115, and 116, and an OK key 117. Wherein, the left soft-key-triggering key 111 is used to trigger the left soft key on the screen; the right soft-key-triggering key 112 is used to trigger the right soft key on the screen; and the OK key 117 is used to trigger the currently selected option. In addition, a first function key 101 and a second function key 102 can be defined by the manufacturer, which may be used as a key for returning from the main menu and a key for switching between input methods, respectively. A green key 103 is used for dialing and picking up; a red key 104 is used for hanging up; the Clear key 105 is used for deleting the content being edited; keys 0~9 and key *, key # can be used for inputting digits and characters.

The second method for operating a mobile telephone is to use a touch screen and an stylus for on-screen positioning of a mobile telephone. The cost of such a screen is higher than that of an ordinary Liquid Crystal Display (LCD). With such a screen, the user can operate the mobile telephone usually by holding the mobile telephone in one hand and writing with the stylus in the other hand.

The third method for operating a mobile telephone is to use a joy stick for the on-screen positioning of the mobile telephone. In particular, a joy stick in columnar shape is provided on the mobile telephone. The user can operate this joy stick in four directions, i.e., up, down, left, and right, as required.

In the practical application, the above described schemes are not convenient, flexible, or accurate enough. In detail, in the first method for operating a mobile telephone, the direction key area occupies too much space on the keypad (usually about 1/3 of the entire keypad area). Furthermore, the user has to press the Up and Down keys to scroll up and down the screen; for example, the user has to press the Up key first and then the Down key in order to scroll up and then scroll down the screen. It can be seen that this operating method is not convenient.

In the second method for operating a mobile telephone, the overall cost of this kind of mobile telephone is higher due to the fact that the cost of a touch screen is higher than that of an ordinary LCD. Furthermore, this kind of mobile telephone can not be operated with only one hand; therefore, it is not convenient for operating.

In the third method for operating a mobile telephone, there may be the poor touching sense, inconvenient operation, and difficulty in cleaning. In detail, the joy stick is a columnar object with a small top area, the contact area between the fingers and the joy stick is very small, so that if the user applies a large force during the operation of the joy stick his/her fingers may suffer an uncomfortable sense. Furthermore, if the user's hand is moist due to sweating or the joy stick is too tight, it may be difficult to operate the joy stick. In addition, the joy stick usually can not be operated in other directions in addition to the four directions of up, down, left, and right, which brings inconvenience in direction control and positioning. Moreover, there is an annular groove usually in the clearance between the joystick and the mobile telephone, which is difficult to clean in the case any dirt falls in.

Other mobile terminals, such as Personal Handyphone System (PHS) terminals and PDAs, also have similar problems.

### Summary of the Invention

The present invention provides a mobile terminal and its keypad, a region selection method, and a method for positioning and triggering a screen focal point, which are convenient in operation and can achieve accurate and flexible positioning.

In one aspect, the present invention provides a mobile terminal keypad, including:
a touch key for accepting a user's operation and detecting a rubbing direction and distance, so as to move a focal point on a screen of a mobile terminal; and
at least one lock key for accepting a user's operation to lock or unlock the current coordinates of a focal point on a screen.

Wherein, the touch key may also accept the user's operation of pressing, to trigger a current focal point control.

Furthermore, there may be two lock keys.

Furthermore, the touch key may be located in a central part on front face of the mobile terminal; and
the two lock keys may be located at two sides of the mobile terminal respectively.

Furthermore, the lock key at left side of the mobile terminal may be at a position touchable by the forefinger of the user's right hand, when the user holds the mobile terminal with right hand and places the thumb of right hand onto the touch key; and

the lock key at right side of the mobile terminal may be at a position touchable by the forefinger of the user's left hand, when the user holds the mobile terminal with left hand and places the thumb of left hand onto the touch key.

Furthermore, the two lock keys may also be used to trigger left and right soft keys on the screen.

Furthermore, the mobile terminal keypad may also include one of the following keys or any combination of the following keys:
digit keys 0-9, a key *, and a key #, for inputting digits or characters;
a Pick-Up key, for dialing or picking up;
a Hang-Up key, for hanging up the current call;
a clear key, for enabling the user to delete the content edited currently;
a function key, for enabling the user to implement functions predefined by a manufacturer.

The present invention also provides a method for implementing region selection with the mobile terminal keypad which includes:
Determining a first point according to current coordinates of a focal point on a screen by pressing a lock key;
moving the focal point by rubbing a touch key; and
determining a second point current coordinates of the focal point on the screen by pressing the lock key again, in which the area confined by the rectangle with the first and the second points as the diagonal points is the area of region selection.

The present invention also provides a method for implementing region selection with the mobile terminal keypad which includes:
determining a first point current coordinates of a focal point on a screen by pressing a touch key;
moving the focal point by rubbing the touch key; and
determining a second point according to current coordinates of the focal point on the screen by pressing the touch key again, in which the area confined by the rectangle with the first and the second points as the diagonal points is the area of region selection.

The present invention also provides a method for selecting and triggering a focal point control with a mobile terminal keypad which includes:
moving a focal point on a screen between different controls or between different options of a control by rubbing a touch key; and
triggering the current focal point control by pressing the touch key.

Wherein, if the focal point control is a list, the list scrolls upward or downward when the user rubs the touch key; and
an operation corresponding to the current item in the list is triggered when the user pressing the touch key.

The present invention also provides a mobile terminal including a mobile terminal keypad, wherein the mobile terminal keypad may include:
a touch key for accepting a user's operation and detecting a rubbing direction and distance, so as to move a focal point on a screen of a mobile terminal; and
at least one lock key for accepting a user's operation to lock or unlock the current coordinates of a focal point on the screen.

In the technical solutions provided in the present invention, a focal point on the screen may be moved by rubbing a touch key. At least one lock key is added to lock or unlock current coordinates of the focal point on the screen. With cooperation of the touch key and the lock key, region selection can be implemented by way of locking, moving, and unlocking.

In addition, the touch key can also be pressed, so that the current focal point control can be triggered by rubbing the touch key to move the focal point on the screen to the required control or option and then pressing the touch key.

The touch key may be located in the central part of front face of the mobile terminal, and two lock keys may be located at two sides of the mobile terminal respectively. When the user holds the mobile terminal with one hand, the user's thumb and forefinger can be placed on the touch key and a lock key naturally.

The two lock keys can also be used to trigger the left and right soft keys.

With the touch key, the focal point on the screen can be moved in any direction, and the moving distance can be controlled accurately through the rubbing distance. Therefore, the on-screen positioning may be more flexible and accurate.

Since the touch key only occupies a very small area on the keypad, the keys can be arranged more loosely on the keypad, such that the probability of incorrect operation of keys can be decreased. Since the touch key does not protrude above the mobile telephone keypad, it is more comfortable to use. Furthermore, such a touch key is also applicable to foldable mobile telephones.

The user can finish all operations available in the mobile terminal conveniently with one hand, including region selection operation, because the touch key and the lock key(s) can be controlled at the same time with two fingers of the hand. Therefore, the technical solution provided in the present invention is especially applicable for image editing.

Since the two lock keys are located at the two sides of the mobile terminal, both a right hander (who may use the lock key at left side) and a left hander (who may use the lock key at right side) can use the mobile terminal conveniently. It can be seen that this mobile terminal is more humanized.

### Brief Description of the Drawings

Fig.1 is a schematic layout diagram of a keypad of a mobile telephone in the prior art;

Fig.2 is a schematic layout diagram of a mobile telephone keypad according to the first embodiment of the present invention;

Fig.3 is a schematic diagram of the mobile telephone keypad controlling a focal point on the screen according to the first embodiment of the present invention;

Fig.4 is a schematic diagram of region selection with a lock key and touch keypad according to the first embodiment of the present invention;

Fig.5 is a schematic diagram of positioning in the direction in 45° anticlockwise from the X direction or in the direction in 45° anticlockwise from the Y direction in the first embodiment of the present invention;

Fig.6 is a schematic flow diagram of a region selection method with a mobile telephone keypad according to the second embodiment of the present invention.

### Detailed Description of the Preferred Embodiments

The present invention will be further detailed in connection with the preferred embodiments with reference to the attached drawings.

In general, the essential of the present invention lies in that a touch key and at least one lock key are provided on the keypad of the mobile telephone. The focal point on the mobile telephone screen can be moved according to the movement of the user's finger when the user's finger rubs the touch key that also provides a triggering function. The lock key (s) can lock or unlock the current coordinates of the focal point on the screen. Furthermore, the touch key and the lock key (s) are arranged in a way that the user can operate them with one hand, so as to provide the user with more convenient on-screen positioning functions, such as region selection.

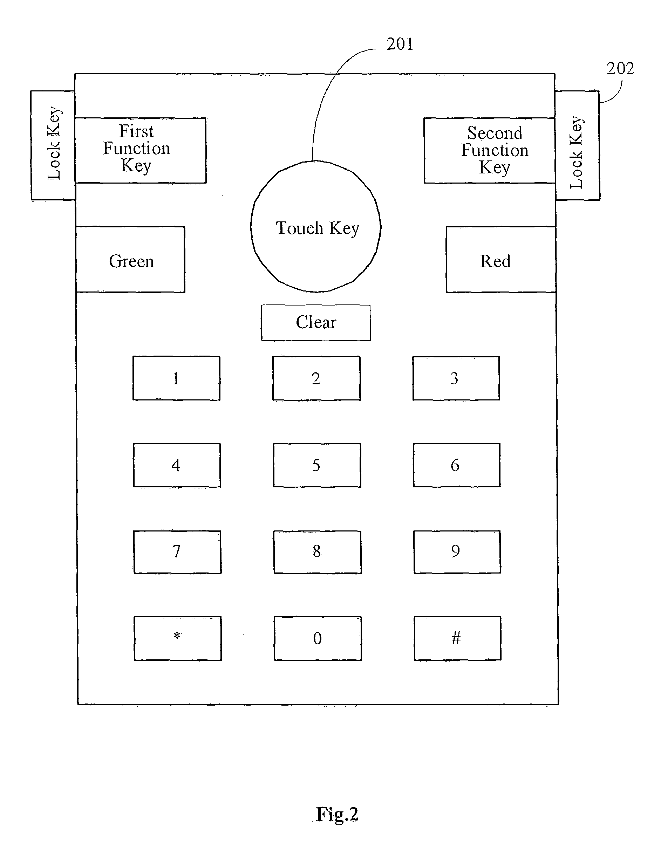

As shown in Fig.2, in the first embodiment of the present invention, in addition to the two lock keys 202 with the same function and a touch key 201, the mobile telephone keypad also provides: keys 0-9, key * and key # for inputting digits and characters; a green key (Pick-Up key) for dialing and picking up; a red key (Hang-Up key)for hanging up the current call; a Clear key for deleting the content currently edited; a first and a second function keys for implementing functions predefined by the manufacturer. It is to be noted that the mobile telephone keypad can contain any one or any combination of the above described keys in other embodiments of the present invention.

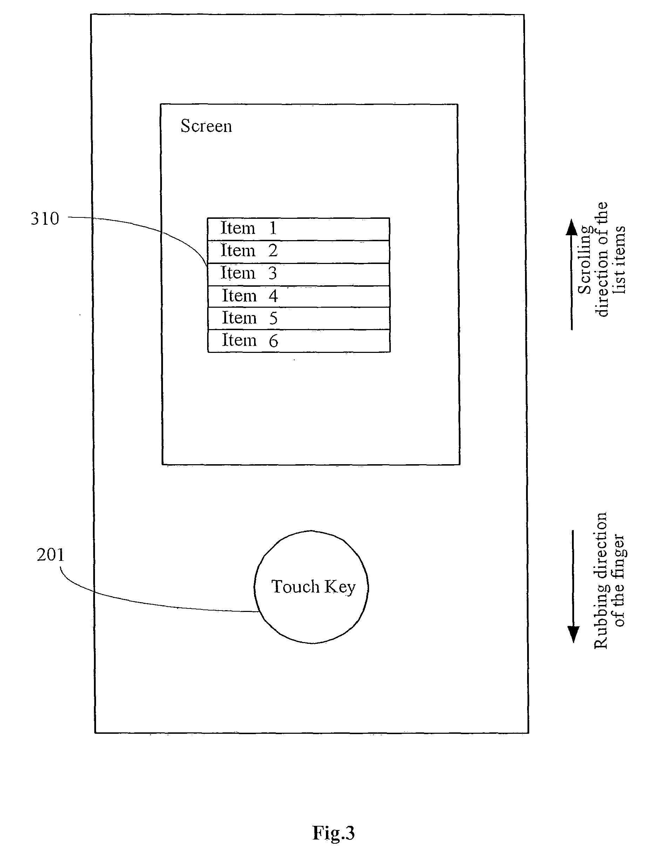

In the present embodiment, the mobile telephone user can perform on-screen positioning of the mobile telephone simply by rubbing the touch key 201 with a thumb while enjoying a comfortable hand feeling. For example, to select a focal point control, the user can rub the touch key 201 downward, so that the focal point on the screen moves downward. As shown in Fig.3, if the current focal point control is a list 310, the above-mentioned rubbing will cause the list 310 to scroll upward.

To select a particular item of a focal point control, the user can press the touch key 201 to trigger the current focal point control, which is equivalent to the OK key on a mobile telephone in the prior art.

It will be understood that this design has made a change over the concept of "positioning first and then triggering" that is widely adopted in mobile telephone operations. In this design the positioning and triggering functions is integrated in the touch key. The user can trigger the selected item without moving his/her finger after the positioning is accomplished, such that the mobile telephone is more convenient to operate.

The touch key has an increased contact area for the finger, and thereby is more comfortable to use. In addition, different to the inevitable protruding design of joy stick, the touch key does not protrude above the mobile telephone keypad; therefore, it is also applicable to a foldable mobile telephone.

Furthermore, compared with the Up, Down, Left, and Right direction keys, the touch key in this embodiment saves space occupied on the mobile telephone keypad significantly, and thereby provides a looser keypad layout and decreases the probability of incorrect operation on keys resulted from a crowded keypad layout. As the result, the user can operate the mobile telephone more quickly and accurately with the touch key provided in the present embodiment.

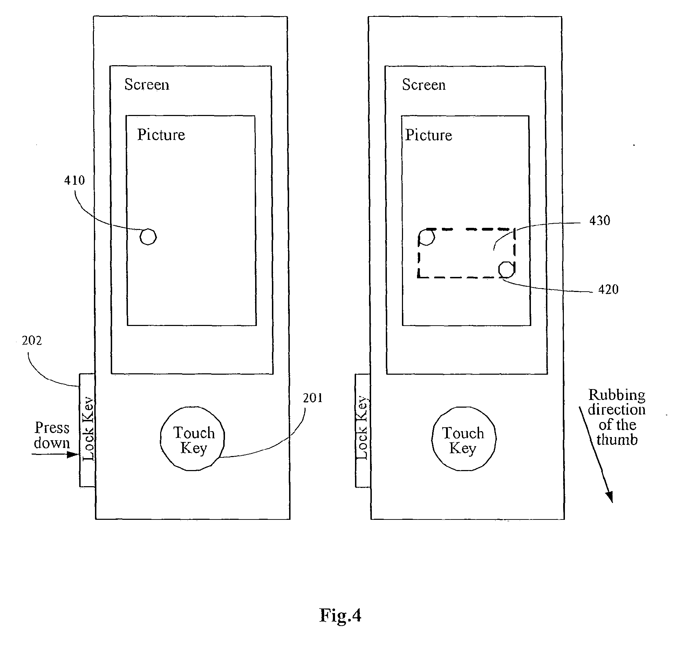

The lock key on the mobile telephone can be used to lock or unlock the current coordinates of a focal point on the screen. In detail, as shown in Fig.4, when the lock key 202 is pressed , the current coordinates will be locked as the first point 410. Then, the focal point is moved to the required position by the user rubbing the touch key 201, and the lock key 202 is pressed again to lock the second point 420, and the region required by the user can be determined with the first and the second points 410 and 420. The region selection function provided in the present embodiment may facilitate image editing on mobile telephones.

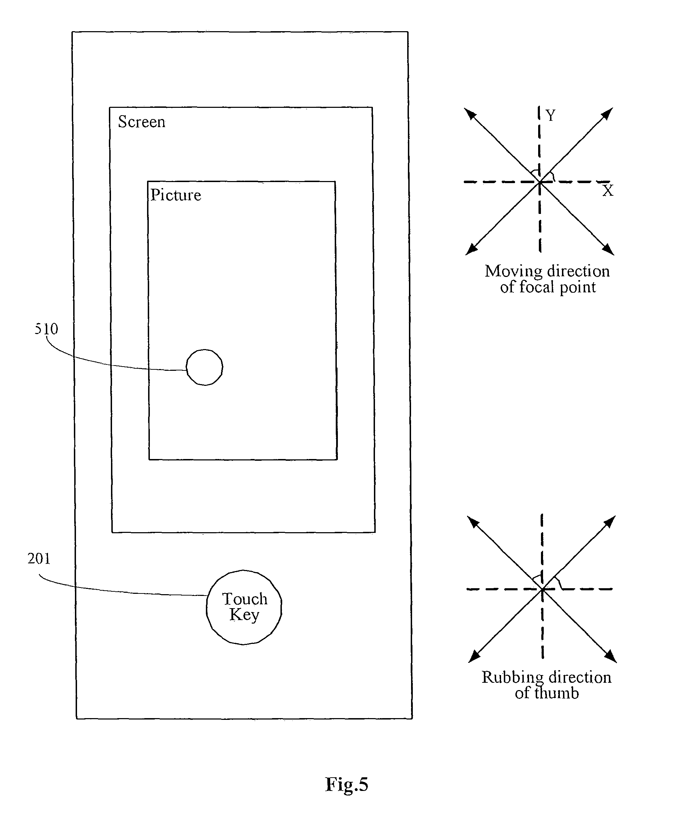

Through the touch key in this embodiment, accurate positioning can be ensured and 2D space positioning can be achieved. The 2D space includes an X direction and a Y direction, wherein, the X direction is usually the text displaying direction on mobile telephone screen, while the Y direction is perpendicular to the X direction. The touch key can be operated in a direction parallel to the X or Y direction, i.e., rubbing left-and-right or up-and-down, so as to achieve positioning in both of the X and Y directions. In addition, the touch key 201 supports a variety of positioning modes by means of rubbing in any direction. For example, as shown in Fig.5, when the user rubs the touch key in the direction in 45° anticlockwise from the X direction or in the direction in 45° anticlockwise from the Y direction, the focal point 510 moves in the direction in 45° anticlockwise from the X direction or in the direction in 45° anticlockwise from the Y direction accordingly. It can be seen that more a flexible positioning may be achieved through this embodiment.

It is to be noted that, in this embodiment, the scrolling range on the screen depends upon the relative moving speed between the user's finger and the touch key. The scrolling accuracy may be improved through improving the accuracy of the sensing element (e.g., a piezoresistor) on the touch key. Furthermore, the scrolling accuracy can be adapted dynamically during the operation of the mobile phone by changing the software detection frequency.

In this embodiment, as shown in Fig.2, the touch key is located in the central part on front face of the mobile telephone (as those skilled in the art can understand, the so-called central part on front face usually refers to the central part slightly upward in the keypad area of the mobile telephone), and the two lock keys are located at two sides of the mobile telephone respectively. The positions of the lock key shall meet certain requirements, i.e., when the user holds the mobile telephone with the right hand and places the thumb of the right hand on the touch key, the lock key at left side of the mobile telephone shall be at a position touchable by the forefinger of the right hand; likewise, when the user holds the mobile telephone with the left hand and places the thumb of the left hand on the touch key, the lock key at right side of the mobile telephone shall be at a position touchable by the forefinger of the left hand.

In such a case, when the user wishes to use the two lock keys, he/she need not move the fingers in a wide range. As a result, the operations are more convenient, because all positioning operations can be accomplished with only one hand. Furthermore, owing to the design that two lock keys are provided at both of the left and right sides, the user can accomplish the operations with one hand even when he/she holds the mobile telephone with his/her left hand.

It is to be noted that, in other embodiments of the present invention, the two lock keys can also be used to trigger the left and right soft keys on the screen, which causes the operations to be more convenient.

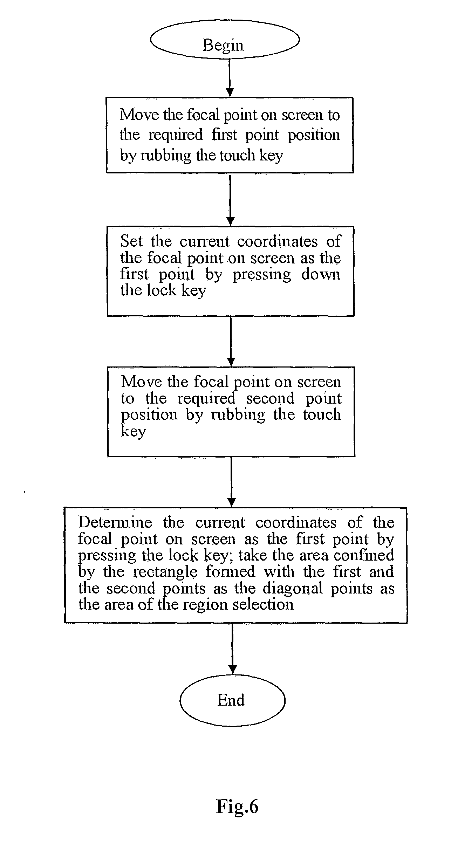

Fig.6 is a schematic flow diagram of the region selection method with mobile telephone keypad in the first embodiment of the present invention. First, in step 610, the user moves the focal point on the screen to the required first position by rubbing the touch key with a finger. Next, in step 620, the user presses the lock key, thereby defining the first point according to the current coordinates of the focal point. In step 630, the user moves the focal point to the required second position by rubbing the touch key. Then, in step 640, the user presses the lock key, thereby defining the second point according to the current coordinates of the focal point. The rectangle with the first and the second points as the diagonal points is the area of region selection.

With such a method, region selection can be accomplished conveniently with the touch key and the lock keys on the mobile telephone keypad in the first embodiment. As those skilled in the art will recognize, the region selection function may facilitate the image editing on a mobile telephone.

The method described above is only one implementation of region selection function. The region selection function can be implemented in other ways, for example, the coordinates can be locked or unlocked by pressing the touch key directly.

Hereunder the method for selecting and triggering a focal point control with the mobile telephone keypad in the first embodiment will be described.

First, the user moves the focal point on the screen between different controls or between different options of a same control by rubbing the touch key with a finger, till he/she selects the required option. Then, the user presses the touch key, thereby triggering the current focal point control. In this embodiment, if the focal point control is a list, the list will scroll upward or downward when the user rubs the touch key. In addition, the operation corresponding to the current item in the list will be triggered when the user presses the touch key.

In summary, in the present embodiment, a focal point on the screen is moved by rubbing a touch key; at least one lock key is added to lock or unlock current coordinates of the focal point on the screen. With the cooperation of the touch key and the lock key(s), a variety of mobile telephone operations (e.g., region selection) can be implemented by way of locking, moving, and unlocking. It can be seen that, with the touch key, the focal point on the screen can be moved in any direction, and the moving distance can be controlled accurately through the rubbing distance, which makes the positioning on the screen more flexible and accurate. Furthermore, the keys can be arranged more loosely on the keypad, because the touch key only occupies a very small area on the keypad, thereby reducing the probability of incorrect operation on the keys. In addition, in the present embodiment, the user can finish all the operations available in the mobile terminal conveniently with one hand, such as, region selection operation, because the touch key and the lock key can be controlled at the same time with two fingers of one hand, which is especially applicable for image editing.

Though the present embodiment is described by taking a mobile telephone as an example, the method can also be used in other mobile terminals, such as a PHS terminal and a PDA, etc.

While the present invention has been illustrated and described with reference to some preferred embodiments, those skilled in the art shall recognize that various changes in the form or in the detail thereof can be made without departing from the spirit and scope of the present invention as defined by the accompanied claims.

## Claims

1. A mobile terminal keypad, comprising:
a touch key for accepting a user's operation and detecting a rubbing direction and distance, so as to move a focal point on a screen of a mobile terminal; and
at least one lock key for accepting a user's operation to lock or unlock the current coordinates of a focal point on a screen.

2. The mobile terminal keypad according to claim 1, wherein the touch key also accepts the user's operation of pressing, to trigger a current focal point control.

3. The mobile terminal keypad according to claim 1, wherein there are two lock keys.

4. The mobile terminal keypad according to claim 3, wherein the touch key is located in a central part on front face of the mobile terminal; and
the two lock keys are located at both sides of the mobile terminal respectively.

5. The mobile terminal keypad according to claim 4, wherein the lock key at left side of the mobile terminal is at a position touchable by the forefinger of the user's right hand, when the user holds the mobile terminal with right hand and places the thumb of right hand onto the touch key; and
the lock key at right side of the mobile terminal is at a position touchable by the forefinger of the user's left hand, when the user holds the mobile terminal with left hand and places the thumb of left hand onto the touch key.

6. The mobile terminal keypad according to claim 3, wherein the two lock keys are also used to trigger left and right soft keys on the screen.

7. The mobile terminal keypad according to any one of claims 1-6, further comprising one of the following keys or any combination of the following keys:
digit keys 0-9, a key *, and a key #, for inputting digits or characters;
a Pick-Up key, for dialing or picking up;
a Hang-Up key, for hanging up the current call;
a clear key, for enabling the user to delete the content edited currently;
a function key, for enabling the user to implement functions predefined by a manufacturer.

8. A method for implementing region selection with a mobile terminal keypad, comprising:
determining a first point according to the current coordinates of a focal point on a screen by pressing a lock key;
moving the focal point by rubbing a touch key; and
determining a second point according to the current coordinates of the focal point on the screen by pressing the lock key again, in which the area confined by the rectangle with the first and the second points as the diagonal points is the area of region selection.

9. A method for implementing region selection with the mobile terminal keypad, comprising:
determining a first point according to the current coordinates of a focal point on a screen by pressing a touch key;
moving the focal point by rubbing the touch key; and
determining a second point according to the current coordinates of the focal point on the screen by pressing the touch key again, in which the area confined by the rectangle with the first and the second points as the diagonal points is the area of region selection.

10. A method for selecting and triggering a focal point control with a mobile terminal keypad, comprising:
moving a focal point on a screen between different controls or between different options of a control by rubbing a touch key; and
triggering the current focal point control by pressing the touch key.

11. The method according to claim 10, wherein if the focal point control is a list, the list scrolls upward or downward when the user rubs the touch key; and
an operation corresponding to the current item in the list is triggered by pressing the touch key.

12. A mobile terminal comprising a mobile terminal keypad, wherein the mobile terminal keypad comprises:
a touch key for accepting a user's operation and detecting a rubbing direction and distance, so as to move a focal point on a screen of a mobile terminal; and
at least one lock key for accepting a user's operation to lock or unlock the current coordinates of a focal point on a screen.
